(19) Europäisches Patentamt
European Patent Office
Office européen des brevets

(11) Numéro de publication: **0 085 596**
**B1**

# (12) FASCICULE DE BREVET EUROPEEN

(45) Date de publication du fascicule du brevet: **27.03.85**

(51) Int. Cl.[4]: **A 01 N 33/24**, C 07 C 83/00

(21) Numéro de dépôt: **83400108.3**

(22) Date de dépôt: **17.01.83**

## (54) Application comme facteurs de croissance des végétaux de l'O-phényl hydroxylamine et de certains de ses dérivés.

(30) Priorité: **28.01.82 FR 8201321**

(43) Date de publication de la demande: **10.08.83 Bulletin 83/32**

(45) Mention de la délivrance du brevet: **27.03.85 Bulletin 85/13**

(84) Etats contractants désignés: **AT BE CH DE GB IT LI LU NL SE**

(56) Documents cités:
**R. WEGLER: "Chemie der Pflanzenschutz- und Schädlingsbekämpfungsmittel", vol. 4, 1977, pages 47-53, Springer-Verlag, Berlin, DE.**
**TETRAHEDRON, vol. 28, no. 4, juillet 1972, pages 3833-3843, Pergamon Press, Oxford, G.B., T. SHERADSKY et al.: "Introduction of the aminooxy group on to nitroaromatic and heterocyclic rings. Synthesis and properties of 0-(nitroaryl)hydroxylamines"**
**JOURNAL OF THE CHEMICAL SOCIETY, Perkin Transactions I, no. 16, 1977, pages 1827-1831, London, G.B. T. SHERADSKY et al.: "Cope rearrangements of arylvinylhydroxylamines"**

(73) Titulaire: **ROUSSEL-UCLAF, 35, boulevard des Invalides, F-75007 Paris (FR)**

(72) Inventeur: **van Assche, Charles Jacques, Super Rouvière B 7 83 boulevard du Redon, F-13009 Marseille (FR)**
Inventeur: **Herve, Jean Jacques, Parc Privé Pin Vert No 44, F-13400 Aubagne (FR)**
Inventeur: **Carles, Pierre, 113, Chemin des Mourets, F-13013 Marseille (FR)**

(74) Mandataire: **Fritel, Hubert et al, ROUSSEL-UCLAF 111, route de Noisy Boîte Postale no. 9, F-93230 Romainville (FR)**

**EP 0 085 596 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

**Description**

La présente invention concerne l'application comme facteurs de croissance des végétaux de l'O-phényl hydroxylamine et de certains de ses dérivés.

Jusqu'à present seuls des dérivés aliphatiques et non O-substitués de l'hydroxylamine ont été utilisés comme régulateurs de croissance des végétaux. D'après R. Wegler, »Chemie der Pflanzenschutz- und Schädlingsbekämpfungsmittel«, 1977, Vol. 4, p. 52—53, ces dérivés ont un effet inhibiteur de croissance.

L'invention a pour objet l'application, comme facteurs de croissance des végétaux, des composés de formule (I):

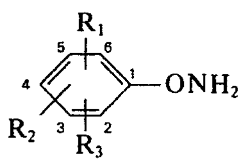

(I)

dans laquelle soit $R_1$ représente un atome d'hydrogène, et

- ou bien $R_2$ représente un atome d'hydrogène et $R_3$ représente un atome d'hydrogène, un radical méthyle en 2, 3 ou 4, un atome de chlore en 3 ou 4, un atome de brome ou un radical $CF_3$ en 4 ou un radical $NO_2$ en position 2 ou 4,
- ou bien $R_2$ représente un radical nitro en 2 et $R_3$ représente un radical nitro ou un radical $CF_3$ en 4,

soit $R_1$ représente un radical nitro en 2 et

- ou bien $R_2$ représente un radical nitro en 4 et $R_3$ un radical nitro en 6,
- ou bien $R_2$ représente un radical nitro en 6 et $R_3$ un radical $CF_3$ en 4, ainsi que de leurs sels d'addition avec les acides organiques et minéraux.

Les composés de formule (I) sont des composés connus: voir à ce sujet CA 82(21) 139 982 h, CA 83(5) 43 608, CA 88(9) 62 075 d, CA 93(15) 149 948 t, CA 68(5) 21 678 W, ou encore le brevet allemand 2 059 190.

Ces composés peuvent être préparés, d'une façon générale, soit en soumettant un composé de formule:

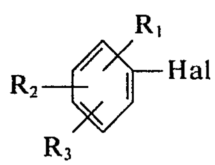

dans laquelle $R_1$, $R_2$ et $R_3$ conservent leur signification précédente à l'action de l'hydroxylamine, pour obtenir le composé de formule (I) correspondant, selon le schéma suivant:

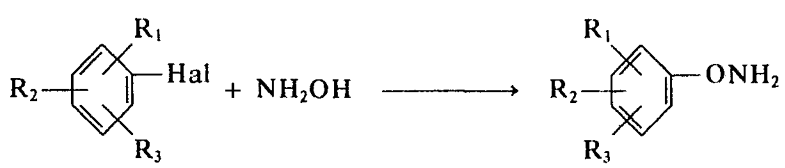


soit en soumettant un composé de formule:

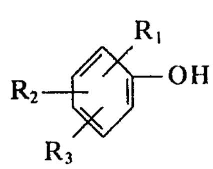

à l'action de $H_2NOSO_3H$ pour abtenir le composé de formule (I) correspondant selon le schéma suivant:

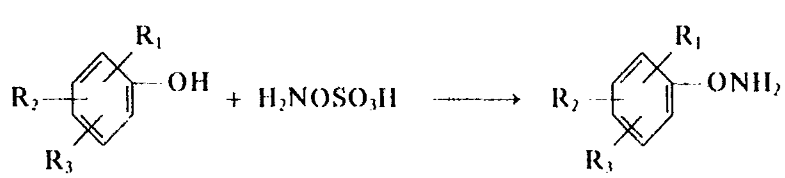

Comme exemples de sels d'addition avec les acides, on peut citer ceux formés avec les acides forts tels que les acides chlorhydrique, bromhydrique, sulfurique, nitrique ou encore trifluoroacétique.

Les composés de formule (I) et leurs sels avec les acides n'avaient pas trouvé d'application en agriculture jusqu'à présent. La Société demanderesse a maintenant trouvé que les composés de formule (I) et leurs sels avec les acides peuvent être utilisés comme facteurs de croissance des végétaux. Les produits de formule (I) et leurs sels avec les acides peuvent, d'une façon générale, être utilisés en agriculture pour améliorer l'état physiologique des végétaux cultivés et obtenir une augmentation de poids des récoltes.

L'invention a plus particulièrement pour objet l'application comme facteurs de croissance des végétaux de l'O-(4-nitrophényl)hydroxylamine, de l'O-phényl hydroxylamine et de l'O-(4-chlorophényl)hydroxylamine, ainsi que de leurs sels d'addition avec les acides organiques et minéraux et notamment leurs chlorhydrates.

L'invention a également en particulier pour objet l'application comme facteurs de croissance des végétaux des composés suivants:

- l'O-(2-nitrophényl)hydroxylamine;
- l'O-(2,4-dinitrophényl)hydroxylamine;
- l'O-(2-nitro 4-trifluorométhyl phényl hydroxylamine;
- l'O-(4-méthyl phényl)hydroxylamine et ses sels;
- l'O-(4-bromophényl)hydroxylamine et ses sels;
- l'O-(2-nitro 4-chlorophényl)hydroxylamine.

Dans la partie expérimentale donneé ci-après, sont décrits des tests montrant sur diverses parties de la plante, l'action de diminution de l'inhibition par l'oxygène de la photosynthèse. Ce phénomène est constant dans toutes les expériences effectuées. Ces tests décrivent l'étude de l'activité des produits de formule (I) et de leurs sels sur »l'effet Warburg«, l'étude de l'activité de la 4-nitrophényl hydroxylamine sur la toxicité de l'oxygène vis-à-vis de la photosynthèse de protoplastes de feuilles de blé, l'étude de l'activité de la 4-nitrophényl hydroxylamine sur la toxicité de l'oxygène vis-à-vis de la photosynthèse de chloroplastes intacts, extraits de feuilles de blé et les effets de la 4-nitrophényl hydroxylamine sur le bilan carboné des plantes.

D'autres tests dans la partie expérimentale, montrent l'augmentation du poids des plants traités, notamment pour la tomate et le soja, lorsqu'on fait agir la 4-nitro phényl hydroxylamine.

L'étude a été conduite sur divers modèles de culture quant à la nature des organes récoltés (racines, gousses, graines, fruits, feuilles).

Les divers exemples choisis montrent des possibilités d'utilisation sur des plantes aussi variées que le soja, le blé, l'orge, l'avoine, le coton, le haricot, les rosacées, les composacées, et plus, spécifiquement sur les plantes dites en $C_3$ (c'est-à-dire, les plantes dont le premier produit formé ou cours de la photosynthèse est une molécule à trois atomes de carbone).

L'invention a donc plus particulièrement pour objet l'application comme facteurs de croissance des végétaux dits »en $C_3$«, des produits de formule I et de leurs sels et notamment des produits de formule I mentionnés précédemment.

Les composés de formule I ont pour effet de diminuer l'inhibition par l'oxygène, de la photosynthèse.

La nature même du mode d'action par diminution de l'effet inhibiteur de l'oxygène sur la photosynthèse ouvre des perspectives d'avenir tout à fait remarquables et surprenantes pour améliorer le rendement des cultures des plantes dites en $C_3$.

Ce mode d'action a églament pour conséquence d'augmenter d'une façon substantielle la quantité d'oxygène rejeté dans l'atmosphère par les plantes traitées, ce qui offre un aspect écologique non négligeable devant les problèmes actuels de l'accroissement de la quantité de $CO_2$ dans l'atmosphère.

L'invention a aussi pour objet les compositions utilisées comme facteurs de croissance des végétaux, caractérisées en ce qu'elles contiennent une quantité efficace de produits de formule (I), et tout particulièrement des composés suivants:

- l'O-(4-nitrophényl)hydroxylamine;
- l'O-phényl hydroxylamine;
- l'O-(4-chlorophényl)hydroxylamine

ainsi que leurs sels d'addition avec les acides organiques et minéraux et notamment leurs chlorhydrates.

Les compositions selon l'invention peuvent se présenter sous forme de poudres granulés, suspensions, émulsions, solutions contenant le principe actif, par exemple, en mélange avec un véhicule et/ou un agent tensio-actif anionique, cationique ou non ionique assurant, entre autres, une dispersion uniforme des substances de la composition. Le véhicule utilisé peut être un liquide, tel que l'eau, l'alcool, les hydrocarbures ou autres solvants organiques, une huile minérale, animale ou végétale, ou une poudre, telle que le talc, les argiles, les silicates, le kieselguhr.

Les compositions solides, présentées sous forme de poudres pour poudrage, de poudres mouillables ou de granulés, peuvent être préparées par mélange du composé actif avec un solide inerte ou par imprégnation du support solide avec une solution du principe actif dans un solvant qu l'on évapore

ensuite.

Outre un véhicule et/ou un agent tensio-actif, ces compositions peuvent contenir, comme principe actif, une ou plusieurs autres substances présentant des propriétés influant sur la croissance des plantes.

Les compositions de l'invention sont, bien entendu, utilisées à des doses suffisantes pour exercer leur activité de facteurs de croissance des végétaux. Les doses de matière active dans les compositions varient notamment en fonction des végétaux à traiter, de la nature du sol, des conditions atmosphériques et de l'état d'avancement de la végétation.

Les compositions utilisées comme facteurs de croissance, selon l'invention, contiennent en général de 10 à 80% en poids et de préférence de 10 à 50% en poids de produits de formule (I) ou de leurs sels.

Lors de l'utilisation des produits de formule (I) ou de leurs sels comme facteurs de croissance des végetaux, les quantités de substance active appliquées varient entre 20 g/ha et 500 g/ha et de préférence entre 40 et 120 g/ha.

Les exemples suivants illustrent l'invention sans la limiter.

## Exemple 1

### Concentré émulsifiable

On a préparé une composition contenant en poids 15% de 4-nitrophényl hydroxylamine, 6,4% d'Atlox® 4851 (triglycéride oxyéthyléné combiné avec un sulfonate, indice d'acide 1,5), 3,2% d'Atlox® 4855 (triglycéride oxyéthyléné combiné avec un sulfonate, indice d'acide 3) et 75,4% de xylène.

## Exemple 2

### Poudre mouillable

On a préparé und poudre mouillable contenant 25% de 4-nitro phényl hydroxylamine, 15% d'Ekapersol (produit de condensation du naphtalène sulfonate de sodium) 35% de Zéosil® 39 (silice hydratée synthétique obtenue par précipitation), et 25% de Vercoryl® S (Kaolin colloïdal).

## Exemple 3

### Concentré émulsifiable

On a préparé une composition contenant en poids 15% de chlorhydrate d'O-phényl hydroxylamine, 6,4% d'Atlox® 4851 3,2% d'Atlox® 4855 et 75,4% de xylène.

## Exemple 4

### Poudre mouillable

On a préparé une poudre mouillable contenant 25% d'O-(4-chlorophényl)hydroxylamine, 15% d'Ekapersol®, 35% de Zéosil® 39 et 25% de Vercoryl® S.

## Exemple 5

### Etude de l'activité des produits de formule I sur l'effet »Warburg«

Les produits de formule I possèdent la propriété de diminuer l'effet inhibiteur de l'oxygène sur la photosynthèse (effet Warburg), ce qui a pour conséquence une stimulation de la photosynthèse et une augmentation du rendement de la récolte.

Les test est effectué sur des feuilles de blé excisées, placées en flottaison soit sur de l'eau distillée, soit sur une solution de produit à étudier (10 mmoles par litre).

Les feuilles sont placées dans des chambres de verre étanches, sous un éclairement de 300 W/m2 et dont la température est régulée à 25°C; l'atmosphère de la chambre est continuellement renouvelée soit avec de l'air normal (21% $O_2$—350 ppm $CO_2$), soit de l'oxygène pur: près de 100%). Lorsque la photosynthèse stationnaire est atteinte, 0,09 µmole de $^{14}CO_2$ est introduite (activité spécifique: 22 mCi/mM) et les feuilles sont laissées pendant 15 minutes à la lumière en présence de gaz carbonique radioactif.

Les feuilles sont ensuite plongées dans l'azote liquide et conservées. Elles sont ensuite brûlées afin de déterminer la quantité de $^{14}CO_2$ fixée par photosynthèse. Les résultats sont exprimés en rapports de radioactivité fixée entre feuilles témoins et traitées avec les produits à étudier.

Lorsque les feuilles ont été traitées avec 10 $\mu$moles de produit à étudier et sont placées dans une atmosphère contenant 100% d'$O_2$, la photosynthèse de celles-ci est stimulée de 15 à 50% (de 18% par exemple pour le chlorhydrate d'O-(4-chloro phényl)hydroxylamine), par rapport au témoin non traite. A titre de contrôle, l'oxygène inhibe la photosynthèse de 15 à 45%.

Ces résultats montrent que les produits de formule I lèvent fortement l'inhibition de l'oxygène vis-à-vis de la photosynthèse (effet »Warburg«).

## Exemple 6

### Etude de l'activité de l'O-(4-nitrophényl)hydroxylamine sur la toxicité de l'oxygène vis-à-vis de la photosynthèse de protoplastes de feuilles de blé

Les protoplastes de feuilles de blé sont extraits selon les techniques classiques d'isolement par macération du matériel végétal dans des solutions enzymatiques cellulosolytique et pectinolytique ainsi que par centrifugation différentielle et filtration.

L'effet inhibiteur de l'oxygène est mesuré sur les suspensions de protoplastes en fonction du traitement à l'O-(4-nitrophényl)hydroxylamine. L'essai consiste à faire varier le rapport des concentrations en oxygène et en $HCO_3^{\ominus}$ dans la suspension de protoplastes en présence et en absence d'O-(4-nitrophényl)hydroxylamine.

La photosynthèse est évaluée par la mesure de l'oxygène dégagé par les protoplastes à la lumière et effectuée à l'électrode de type CLARK à une température de 25°C. L'éclairement dans la cellule de mesure correspond à 250 W/m2.

Les valeurs des taux de photosynthèse observées en fonction du rapport $(H\,CO_3)^{\ominus}/(O_2)$ en présence ou en l'absence de l'O-(4-nitrophényl)hydroxylamine sont rassemblées dans le tableau 1:

Tableau 1

Mesure des taux de photosynthèse de protoplastes de blé, traités et non traités à l'O-(4-nitrophényl)hydroxylamine 40 $\mu$M, en présence de diverses concentrations relatives en $(HCO_3)^{\ominus}$ et en $O_2$.

| Rapport $\frac{(CO_3H^{\ominus})}{(O_2)}$ | Photosynthèse du témoin (en $\mu$moles d'$O_2$ dégagé/mg chlorophylle/heure) | Photosynthèse obtenue en présence de l'O-(4-nitrophényl)hydroxylamine 40 $\mu$M | |
|---|---|---|---|
| | | en $\mu$moles d'$O_2$ dégagé/mg chlorophylle/heure | en pourcentage du témoin non traité |
| $2,25 \cdot 10^{-3}$ | 196 | 198 | 101 |
| $1,10 \cdot 10^{-3}$ | 108 | 122 | 112 |
| $6,7 \cdot 10^{-4}$ | 76 | 96 | 126 |
| $3,3 \cdot 10^{-4}$ | 36 | 68 | 188 |
| $1,1 \cdot 10^{-4}$ | 26 | 58 | 223 |

## Conclusion

L'O-(4-nitrophényl)hydroxylamine diminue fortement la toxicité de l'$O_2$ vis-à-vis la photosynthèse, comme en témoignent les augmentations des taux de photosynthèse des protoplastes de blé traités, surtout lorsque les concentrations rèlatives en bicarbonate et en oxygène sont telles que la photosynthèse soit inhibée (effet »Warburg«).

Exemple 7

Etude de l'activité de l'O-(4-nitrophényl)hydroxylamine sur la toxicité de l'oxygène vis-à-vis de la photosynthèse de chloroplastes intacts, extraits de feuilles de blé

Les chloroplastes intacts, ou de classe A, selon la terminologie de D. O. HALL (Nature 235: 125—126, 1978), sont capables de fixer le gaz carbonique et de dégager de l'oxygène à des taux équivalents à ceux d'une feuille entière (50 à 250 μmoles d'$O_2$ dégagée par mg de chlorophylle et par heure).

Les chloroplastes utilisés dans cet essai sont extraits à partir des protoplastes de feuilles de blé et obtenus par rupture mécanique ménagée des parois cellulaires par choc osmotique, filtration et centrifugation sur gradients de densité.

La photosynthèse est évaluée en mesurant le dégagement d'oxygène de la suspension de chloroplastes intacts, à la lumière, en présence de $HCO_3^{\ominus}$ et d'$O_2$ dont les proportions relatives varient, et en la présence ou l'absence de l'O-(4-nitrophényl)hydroxylamine 40 μmolaire.

Les résultats sont représentés dans le tableau 2:

Tableau 2

Mesure des taux de photosynthèse de protoplastes de blé traités et non traités avec l'O-(4-nitrophényl)-hydroxylamine 40 μM, en présence de diverses concentrations relatives en bicarbonate et en oxygène.

| Rapport $\frac{(CO_3H)^{\ominus}}{(O_2)}$ | Photosynthèse du témoin (en μmoles d'$O_2$ dégagé/mg chlorophylle/heure) | Photosynthèse obtenue en présence de l'O-(4-nitrophényl)hydroxylamine 40 μM — en μmoles d'$O_2$ dégagé/mg chlorophylle/heure | en pourcentage du témoin non traité |
|---|---|---|---|
| $10^{-3}$ | 114 | 120 | 105,2 |
| $4 \cdot 10^{-3}$ | 76 | 100 | 131,5 |
| $3,2 \cdot 10^{-3}$ | 36 | 70 | 194,4 |
| $1,1 \cdot 10^{-4}$ | 26 | 56 | 215,4 |

Conclusion

La stimulation de la photosynthèse de chloroplastes intacts obtenus avec l'O-(4-nitrophényl)hydroxylamine, en particulier lorsque le rapport des concentrations en bicarbonate et en oxygène diminue, montre bien quel'O-(4-nitrophényl)hydroxylamine supprime l'effet toxique de l'oxygène vis-à-vis de la photosynthèse, résultant en une augmentation de celle-ci chez les chloroplastes traités par rapport au témoin.

Exemple 8

Effets de l'O-(4-nitrophényl)hydroxylamine sur le bilan carboné des plantes

L'O-(4-nitrophényl)hydroxylamine stimule la photosynthèse des chloroplastes, protoplastes et feuilles tratiés par rapport au témoin, en levant l'inhibition de l'oxygène sur la photosynthèse. Cette propriété originale résulte en une stimulation de la photosynthèse de la plante entière lorsque celle-ci est traitée soit par application racinaire, soit par application foliaire, à l'O-(4-nitrophényl)hydroxylamine.

Le dispositif expérimental permettant de mesurer la photosynthèse est basé sur une méthode de compensation, à partir d'une valeur de consigne de 350 ppm en $CO_2$. Ce dispositif correspond à une modification du montage expérimental proposé par M. ANDRE et al, Ann. Agron. 1979, 30 (2): 139—151.

Les plantes sont enfermées dans des chambres en verre, d'un volume intérieur de 6,250 litres, continuellement balayées à une vitesse de 0,5 $m/s^{-1}$ par un air humidifié à 70%. Les plantes sont éclairées par 5 lampes OSRAM® (HQI) de 250 W chacune, pendant une héméropériode de 12 heures. La teneur en $CO_2$ de l'air, provenant des chambres à assimilation, est analysée par un analyseur infra-rouge URAS 2-T (Hartman et Braun). La concentration en $CO_2$ est ramenée à 350 ppm par injection de ce gaz provenant d'une bouteille de $CO_2$ comprimé et la régulation assurée par des régulateurs Eurotherm® (type

070). Le nombre d'injections de $CO_2$ est compté et enregistré par des compteurs et imprimantes SODECO. Les paramètres microclimatologiques sont enregistrés sur enregistreurs SHESSEL.

Durant la nuit, ce système est désactivé et seules les variations de teneur en $CO_2$ sont directement enregistrées après détermination par l'analyseur infra-rouge.

Les valeurs des prises de $CO_2$ à la lumière mesurées par le nombre d'injections de ce gaz par unité de temps, donnent une mesure de la photosynthèse brute. Le rejet de $CO_2$ par la plante, à l'obscurité, fournit une estimation de la respiration.

Il est donc intéressant de mesurer les effets de l'O-(4-nitrophényl)hydroxylamine sur le bilan carboné des plantes traitées, en étudiant l'évolution des valeurs relatives de photosynthèse et de respiration.

Le méthodologie provient d'une adaptation des travaux de K. J. Mc CREE et J. H. SILSBURY (Crop Science, 1978, vol. 18, pp. 13—18).

Afin d'éviter l'écueil de l'hétérogénéïté existant entre les plantes et les variations inévitables des caractéristiques des chambres d'assimilation utilisées, chaque plante (ou groupe de plantes) n'est traitée avec l'O-(4-nitrophényl)hydroxylamine que 7 jours après le début des mesures: cette période sert de »témoin«. Au bout de 7 jours, les plantes sont traitées soit sur les feuilles, soit par les racines, avec l'O-(4-nitrophényl)hydroxylamine et les mesures de photosynthèse et de respiration effectuées en continu pendant 7 jours; cette 2 ème période correspond au traitement.

## Application foliaire

La poudre mouillable précédemment décrite, contenant 25% d'O-(4-nitrophényl)hydroxylamine est pulvérisée sur les plantes, de sorte que la concentration finale en matière active soit de $10^{-5}$ M. Après séchage de la suspension, les plantes sont replacées dans les chambres à assimilation et les mesures de photosynthèse et de respirations ont entreprises. Les résultats peuvent être représentés graphiquement en portant en abscisse les valeurs de la photosynthèse obtenues pendant l'héméopériode et en ordonnées les valeurs de respiration mesurées pendant la nyctopériode succédant à l'héméropériode. Dans les 2 cas, les valeurs sont exprimées en temps d'ouverture des électrovannes permettant d'atteindre la valeur de consigne de 350 ppm de $CO_2$ (photosynthèse) ou le temps d'ouverture de ces électrovannes conduisant l'air au sortir des chambres vers des pièges à $CO_2$, afin de ramener la teneur en $CO_2$ à 350 ppm (respiration).

A titre d'exemple, le graphique montrant l'évolution du rapport entre photosynthèse et respiration, après application foliaire de l'O-(4-nitrophényl)hydroxylamine sur blé (Triticum Sativum — variété CAPITOLE) est représenté sur la figure 1.

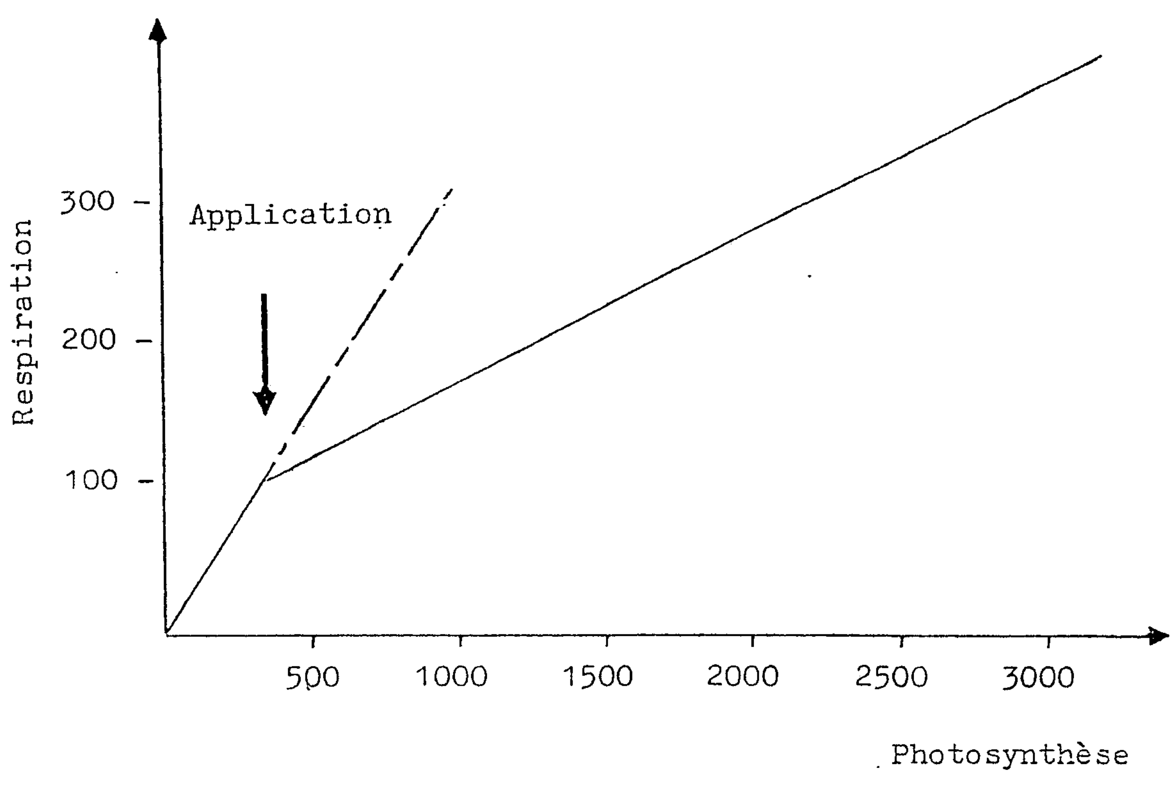

Figure 1

Evolution relative de la photosynthèse et de la respiration en l'absence et en la présence de l'O-(4-nitrophényl)hydroxylamine après application filiaire sur blé.

Pour plus de commodité, les échanges gazeux entre la plante et l'atmosphère sont exprimés en millilitres de $CO_2$ plutôt qu'en durée d'ouverture des électrovannes.

Conclusion

Lorsque la droite reliant tous les points expérimentaux s'écarte de celle représentant le témoin non traité, l'angle formé indique l'ampleur de l'influence du traitement, soit vers un bilan carboné favorable (photosynthèse proportionnellement plus stimulée que la respiration: la droite s'incline vers l'axe des abscisses), soit vers un bilan défavorable (respiration proportionnellement plus stimulée que la photosynthèse: la droite s'incline vers l'axe des ordonnées).

L'exemple présenté sur la figure 1 montre que le bilan carboné du blé traité par l'O-(4-nitrophényl)hydroxylamine est favorable puisque la photosynthèse est fortement stimulée par rapport à la respiration. Cette stimulation provient d'une augmentation du taux de photosynthèse provoqué par l'O-(4-nitrophényl)hydroxylamine et provient d'une levée de l'inhibition de la photosynthèse par l'oxygène, comme celà a été montré dans les exemples 2, 4 et 5.

Dans les essais effectués sur le blé, la stimulation de la photosynthèse est de l'ordre de 30 à 60%.

Application racinaire

Les plantes sont cultivées sur une solution nutritive d'ARNON et HOAGLAND. L'O-(4-nitrophényl)hydroxylamine est appliquée sous forme d'une poudre mouillable à 25% et diluée directement dans la solution nutritive.

Les échanges gazeux sont mesurés en utilisant le même dispositif expérimental que celui décrit au début de l'exemple 6.

Les résultats peuvent être représentés graphiquement en utilisant la méthode de Mc. Cree et Silsbury modifiée.

Dans le cas du blé, l'O-(4-nitrophényl)hydroxylamine a été appliquée dans la solution nutritive sous forme de poudre mouillable, à une concentration finale en matière acitve de $10^{-5}$ M.

Un exemple typique de résultat obtenu avec le blé (Triticum Sativum — variété CAPITOLE) est représenté sur la figure 2.

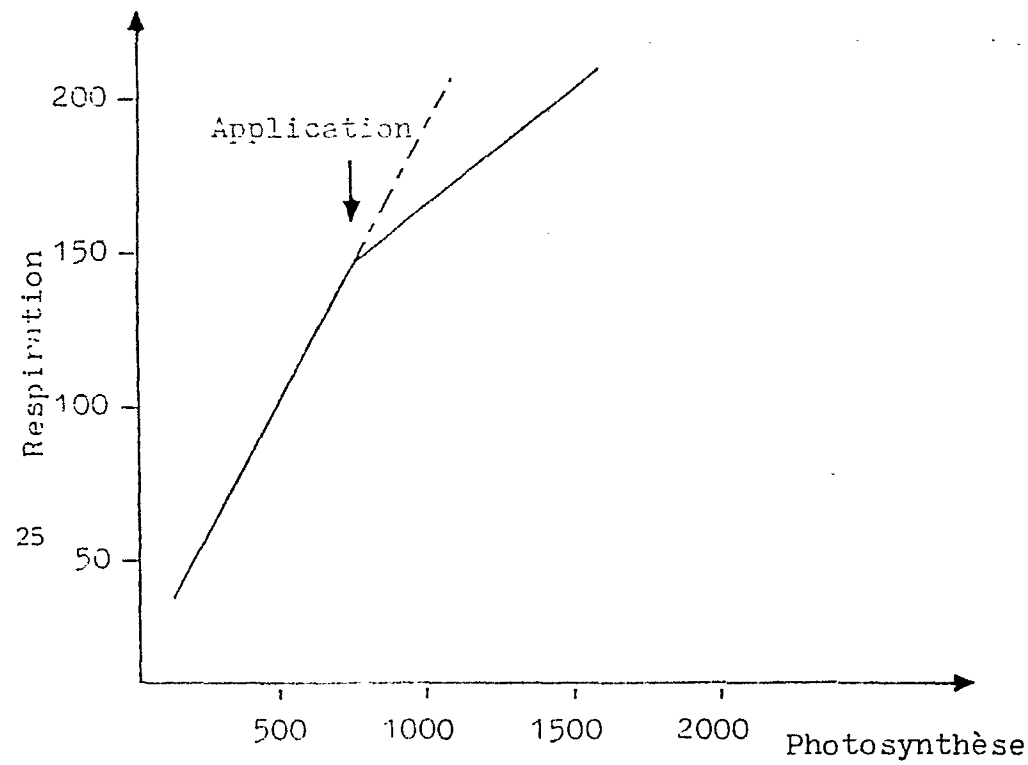

Figure 2

Valeurs relatives de la photosynthèse et de la respiration du blé traité par application racinaire avec l'O-(4-nitrophényl)hydroxylamine.

L'inclinaison de la droite vers l'axe des abscisses, obtenue après le traitement avec l'O-(4-nitrophényl)hydroxylamine montre clairement que la photosynthèse est fortement stimulée par rapport à la respiration. On observe en règle générale, une stimulation, dans le cas du blé, de 28 à 55%.

Les mêmes essais ont été entrepris avec la betterave sucrière (Beta vulgaris — variété CERES MONOGERME): la figure 3 montre un résultat obtenu de façon typique sur cette plante:

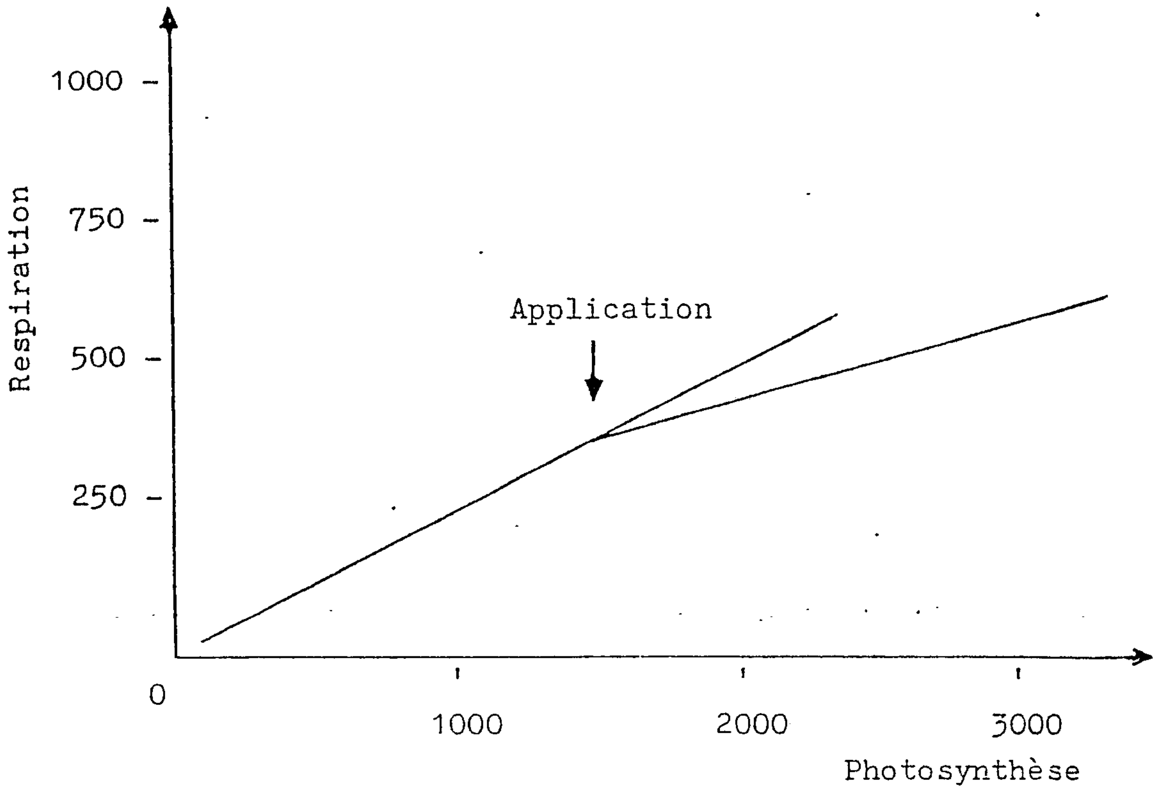


Figure 3

Evolution relative de la photosynthèse et de la respiration des betteraves après application racinaire de l'O-(4-nitrophényl)hydroxylamine.

L'allure de la droite obtenue après application de l'O-(4-nitrophényl)hydroxylamine à une concentration finale de $10^{-5}$ M, sous forme d'une poudre mouillable à 25%, démontre l'effet favorable de l'objet de l'invention sur la photosynthèse par rapport à la respiration.

La stimulation observée sur betterave est de l'ordre de 30 à 40%.

## Conclusion

Les différentes études de laboratoire réalisées au niveau des organites ou d'organes isolés de feuilles ou de plantes entières, montrent que sur les plantes tests étudiées l'O-(4-nitrophényl)hydroxylamine élimine la toxicité de l'oxygène vis-à-vis de photosynthèse. Une des conséquences importantes de cette découverte est la levée d'inhibition (effet »Warburg«) obtenue, qui a pour conséquence une augmentation très importante de la photosynthèse des plantes traitées à l'O-(4-nitrophényl)hydroxylamine.

Cette propriété originale de l'O-(4-nitrophényl)hydroxylamine doit induire une augmentation du rendement des récoltes des plantes cultivées traitées avec ce composé. Un certain nombre d'exemples sont fournis ci-dessous.

Exemple 9

Etude de l'activité comme facteur de croissance de l'O-(4-nitrophényl)hydroxylamine

A — Tests sur tomates

Le test est effectué sur une culture de tomates de variété Europcel. On utilise un bloc de Fisher à 5 répétitions. Les parcelles élémentaires sont de 20 $m^2$ (10 × 2 m) et un témoin non traité est inclus dans chaque répétition. L'essai est implanté sur un sol argileux, calcarolimoneux. Les traitements sont réalisés avec un appareil à dos du type Van der Weij sur la base de 750 l/ha sous une pression constante de 3 bars. Les traitements sont effectués soit après la chute des pétales des premières fleurs ($T_1$), soit après la chute des pétales des dernières fleurs ($T_2 = T_1 + 20$ jours), soit à la nouaison, c'est à dire au moment de la formation des fruits ($T_3 = T_2 + 20$ jours). L'O-(4-nitrophényl)hydroxylamine est utilisée à des doses de 40, 60 ou 120 g/ha en 3 fois ou 1 fois. Deux récoltes de tomates sont rélisées. A chaque récolte, on détermine le rendement en Kg pour 32 plants de tomates, par rapport à un témoin non traité. Les résultats sont exprimés en pourcentage, le tèmoin étant considéré comme ayant un pourcentage de 100%.

Les résultats expérimentaux observés sont résumés dans le tableau suivant:

Tableau 3

| Doses en g/ha | | | Rendement en % par rapport à un témoin non traité | | |
|---|---|---|---|---|---|
| $T_1$ | $T_2$ | $T_3$ | 1ère récolte $J_1$ | 2ème récolte $J_1 + 12$ | Total |
| | 60 g | | 101,3 | 108,5 | 104,4 |
| | 120 g | | 100,9 | 138,3 | 111,9 |
| 120 g | | | 115,2 | 104,1 | 112,6 |
| | | 120 g | 111,4 | 105,9 | 111,2 |
| 40 g | 40 g | 40 g | 100,6 | 121,4 | 107,2 |
| Témoin | | | 100 → 25,4 kg | 100 → 8,9 kg | 100 → 34,3 kg |

Conclusion

L'O-(4-nitrophényl)hydroxylamine possède une activité de facteur de croissance vis-à-vis de la tomate.

B — Test sur soja

Le test est effectué sur une culture de soja. On utilise un bloc de Fisher à 6 répétitions. Les parcelles élémentaires sont de 40 $m^2$ (15 × 2,66 m). Un témoin non traité est inclus dans chaque répétition. L'essai est effectué sur un sol de type sableux calcaro-argileux. Les traitements sont réalisés sur la base de 1000 l/ha, sous une pression de 3 bars avec un appareil à dos de type Van der Weij. Les stades de traitement retenus sont les suivants:

$T_1$ = apparition des boutons floraux
$T_2$ = formation des premières siliques
$T_3$ = fin de formation des siliques.

L'O-(4-nitrophényl)hydroxylamine est utilisée à des doses de 40, 60 ou 120 g/ha en une fois, deux fois ou trois fois. On détermine le rendement en kg pour 5 plants de soja. Les résultats sont exprimés en pourcentage, le témoin étant considéré comme ayant un pourcentage de 100%.

Les résultats expérimentaux observés sont résumés dans le tableau suivant:

| Doses en g/ha $T_1$ | $T_2$ | $T_3$ | Rendement en % par rapport à un témoin non traité |
|---|---|---|---|
| 120 | | | 107,8 |
| | 120 | | 110,5 |
| | | 120 | 117,6 |
| 60 | | | 105,7 |
| | 60 | | 105,2 |
| | | 60 | 102,4 |
| 40 | 40 | 40 | 104,6 |
| 60 | 60 | | 102,8 |
| | 60 | 60 | 116,0 |
| 60 | | 60 | 107,0 |
| Témoin | | | 100 |

Conclusion

L'O-(4-nitrophényl)hydroxylamine possède une activité de facteur de croissance vis-à-vis du soja.

Dans une autre série d'essais effectués sur le soja, dans des conditions subtropicales (Brésil), des augmentations très importantes de rendement en graines ont été obtenues avec l'O-(4-nitrophényl)hydroxylamine.

Le test est effectué sur une culture de soja (variété IAC-6). Le dispositiv expérimental est constitué d'un bloc de Fisher à 4-répétitions. Les parcelles élémentaires sont de 30 $m^2$ et un témoin non traité est inclus dans chaque répétition. Les applications sont effectuées au nombre de 1, 2 ou 4. Les stades de traitement sont les suivants:

$T_1$ = début floraison (60 jours après semis)
$T_2$ = 74 jours après le semis
$T_3$ = 86 jours après le semis (debut du remplissage du grain)
$T_4$ = 96 jours après le semis.

L'O-(4-nitrophényl)hydroxylamine est utilisée à des doses de 60, 120 et 240 g de matière active par hectare, et appliquée sous forme d'une poudre mouillable à 25%.

Le rendement exprimé en kg de graines par ha est comparé au témoin en pourcentage de celui-ci.

Les résultats sont reportés sur le tableau suivant:

| Doses en g/ha $T_1$ | $T_2$ | $T_3$ | $T_4$ | Rendement en pourcentage du témoin |
|---|---|---|---|---|
| | 120 | 120 | | 113,6 |
| 120 | 120 | 120 | 120 | 126 |
| 60 | 60 | 60 | 60 | 126,7 |
| Témoin | | | | 100 |

Conclusion

L'O-(4-nitrophényl)hydroxylamine permet l'augmentation du rendement des cultures de soja.

Dans un autre essai effectué avec la variété de soja BR1, dans des conditions climatiques différentes (pluviométrie plus importante et température plus élévée), l'O-(4-nitrophényl)hydroxylamine a été appliquée selon un protocole expérimental identique. L'O-(4-nitrophényl)hydroxylamine est appliquée au stades suivants:

$T_1$ = 55 jours après plantation (début floraison)
$T_2$ = 70 jours après plantation (développement des gousses)
$T_3$ = 80 jours après plantation (développement des graines)
$T_4$ = 90 jours après plantation (début sénéscence).

Les résultats exprimés en pourcentage du témoin non traité et calculés à partir des rendements en graines par hectare, sont présentés dans le tableau suivant:

| Doses en g/ha $T_1$ | $T_2$ | $T_3$ | $T_4$ | Rendement en pourcentage du témoin |
|---|---|---|---|---|
| | | 240 | | 163 |
| 120 | | 120 | | 161 |
| | | 120 | | 151 |
| 60 | 60 | 60 | 60 | 131 |
| 120 | 120 | 120 | 120 | 175 |
| Témoin | | | | 100 |

Conclusion

L'O-(4-nitrophényl)hydroxylamine augmente les rendements en graines de soja.

Etude de l'effet de l'O-(4-nitrophényl)hydroxylamine sur les cultures de blé

Essai sur blé

L'O-(4-nitrophényl)hydroxylamine a été appliquée par pulvérisation de la poudre mouillable à 25% sur du blé d'hivers (Triticum Sativum variété Lutin).

Les traitements sont effectués aux stades suivants:

$T_0$ = Deuxième noeud formé
$T_1$ = Début gonflement, gaine de la dernière feuille sortie,
$T_2$ = 70% d'épiaison,
$T_3$ = floraison,
$T_4$ = Floraison,
$T_5$ = Grain laiteux,
$T_6$ = Grain farineux.

Les graines récoltées sont pesées et les rendements exprimés en quintaux/hectare. Les pourcentages de rendement obtenus avec le traitement à l'O-(4-nitrophényl)hydroxylamine sont représentés dans le tableau suivant, en fonction des doses et des époques d'application:

Tableau 4

| Dosages en g de matière active/ha | | | | | | | Rendements en grain | |
|---|---|---|---|---|---|---|---|---|
| $T_0$ | $T_1$ | $T_2$ | $T_3$ | $T_4$ | $T_5$ | $T_6$ | Quintaux par ha | en % du témoin |
| | 500 | | | | | | 64,25 | 104,05 |
| | | | 250 | | | | 66,00 | 106,88 |
| 62,5 | 62,5 | 62,5 | 62,5 | 62,5 | 62,5 | 62,5 | 64,62 | 104,66 |
| | 125 | 125 | 125 | 125 | 125 | 125 | 64,62 | 104,66 |
| Témoin | | | | | | | 61,17 | 100 |

Conclusion

L'O-(4-nitrophényl)hydroxylamine appliquée sur les plants de blé augmente le rendement en graines des cultures traitées.

**Revendications**

1. Application comme facteurs de croissance des végétaux, des composés de formule (I):

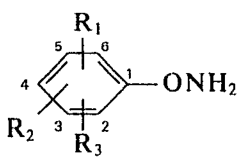

(I)

dans laquelle soit $R_1$ représente un atome d'hydrogène et

- ou bien $R_2$ représente un atome d'hydrogène et $R_3$ représente un atome d'hydrogène, un radical méthyle en 2, 3 ou 4, un atome de chlore en 3 ou 4, un atome de brome ou un radical $CF_3$ en 4 ou un radical $NO_2$ en position 2 ou 4,
- ou bien $R_2$ représente un radical nitro en 2 et $R_3$ représente un radical nitro ou un radical $CF_3$ en 4,

soit $R_1$ représente un radical nitro en 2 et

- ou bien $R_2$ représente un radical nitro en 4 et $R_3$ un radical nitro en 6,
- ou bien $R_2$ représente un radical nitro en 6 et $R_3$ un radical $CF_3$ en 4 ainsi que le leurs sels d'addition avec les acides organiques et minéraux.

2. Application comme facteurs de croissance des végétaux selon la revendication 1 de l'O-(4-nitrophényl)hydroxylamine.

3. Application comme facteurs de croissance des végétaux selon la revendication 1 des composés de formule (I) tels que définis à la revendication 1 dont les noms suivent:

- l'O-phényl hydroxylamine;
- l'O-(4-chlorophényl)hydroxylamine ainsi que de leurs sels d'addition avec les acides organiques et minéraux et notamment leurs chlorhydrates.

4. Application selon la revendication 1, comme facteurs de croissance des végétaux dits en $C_3$, des composés de formule I tels que définis à la revendication 1.

5. Application, selon la revendication 1, comme facteurs de croissance des végétaux dits en $C_3$, de l'O-(4-nitrophényl)hydroxylamine.

6. Application, selon la revendication 1, comme facteurs de croissance des végétaux dits en $C_3$, des composés de formule I tels que définis à la revendication 1 dont les noms suivent:

- l'O-phényl hydroxylamine;
- l'O-(4-chlorophényl)hydroxylamine ainsi que de leurs sels d'addition avec les acides organiques et minéraux et notamment leurs chlorhydrates.

7. Compositions utilisées comme facteurs de croissance des végétaux, caractérisées en ce qu'elles renferment comme principe actif, au moins un composé de formule I tel que défini à la revendication 1 ou au moins un de leurs sels.

8. Compositions utilisées comme facteurs de croissance des végétaux caractérisées en ce qu'elles renferment comme principe actif le composé défini à la revendication 2.

9. Compositions utilisées comme facteurs de croissance des végétaux, caractérisées en ce qu'elles renferment comme principe actif au moins un composé défini à la revendication 3.

10. Compositions telles que définies à la revendications 7, 8 ou 9, caractérisées en ce qu'elles sont utilisées à des doses de principe actif, variant de 20 g à 500 g par hectare.

11. Compositions telles que définies à la revendication 7, 8 ou 9, caractérisées en ce qu'elles renferment der 10 à 80% en poids de principe actif.

**Patentansprüche**

1. Verwendung als Wachstumsfaktoren für Pflanzen der Verbindungen der Formel (I)

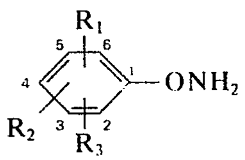

(I)

worin entweder $R_1$ ein Wasserstoffatom bedeutet und

- entweder $R_2$ ein Wasserstoffatom bedeutet und $R_3$ ein Wasserstoffatom, einen Methylrest in 2-, 3- oder 4-Stellung, ein Chloratom in 3- oder 4-Stellung, ein Bromatom oder einen $CF_3$-Rest in 4-Stellung oder einen $NO_2$-Rest in 2- oder 4-Stellung bedeutet;
- oder $R_2$ einen Nitrorest in 2-Stellung bedeutet und $R_3$ einen Nitrorest oder einen $CF_3$-Rest in 4-Stellung bedeutet;

oder $R_1$ einen Nitrorest in 2-Stellung bedeutet und

- entweder $R_2$ einen Nitrorest in 4-Stellung und $R_3$ einen Nitrorest in 6-Stellung bedeutet;
- oder $R_2$ einen Nitrorest in 6-Stellung und $R_3$ einen $CF_3$-Rest in 4-Stellung bedeutet sowie von deren Additionssalzen mit organischen und Mineral-Säuren.

2. Verwendung als Wachstumsfaktoren für Pflanzen gemäß Anspruch 1 von O-(Nitrophenyl)-hydroxylamin.

3. Verwendung als Wachstumsfaktoren für Pflanzen gemäß Anspruch 1 der Verbindungen der Formel (I) gemäß Anspruch 1 mit den folgenden Bezeichnungen

- O-Phenyl-hydroxylamin
- O-(4-Chlorphenyl)-hydroxylamin sowie von deren Additionssalzen mit organischen und Mineral-Säuren und insbesondere von deren Hydrochloriden.

4. Verwendung gemäß Anspruch 1 als Wachstumsfaktoren für sogenannte »$C_3$-Pflanzen« der Verbindungen der Formel (I) gemäß Anspruch 1.

5. Verwendung gemäß Anspruch 1 als Wachstumsfaktoren für sogenannte »$C_3$-Pflanzen« von O-(4-Nitrophenyl)-hydroxylamin.

6. Verwendung gemäß Anspruch 1 als Wachstumsfaktoren für sogenannte »$C_3$-Pflanzen« der Verbindungen der Formel (I) gemäß Anspruch 1 mit den folgenden Bezeichnungen

- O-Phenyl-hydroxylamin
- O-(4-Chlorphenyl)-hydroxylamin sowie von deren Additionssalzen mit organischen und Mineral-Säuren und insbesondere deren Hydrochloriden.

7. Zusammensetzungen für die Verwendung als Wachstumsfaktoren von Pflanzen, die dadurch gekennzeichnet sind, daß sie als Wirkstoff zumindest eine Verbindung der Formel (I) gemäß Anspruch 1 oder zumindest eines von deren Salzen enthalten.

8. Zusammensetzungen für die Verwendung als Wachstumsfaktoren von Pflanzen, dadurch gekennzeichnet, daß sie als Wirkstoff die Verbindung gemäß Anspruch 2 enthalten.

9. Zusammensetzungen für die Verwendung als Wachstumsfaktoren für Pflanzen, dadurch gekennzeichnet, daß sie als Wirkstoff zumindest eine Verbindung gemäß Anspruch 3 enthalten.

10. Zusammensetzungen gemäß Anspruch 7, 8 oder 9, dadurch gekennzeichnet, daß sie in Wirkstoffdosen verwendet werden, die von 20 g bis 500 g/ha variieren.

11. Zusammensetzungen gemäß Anspruch 7, 8 oder 9, dadurch gekennzeichnet, daß sie 10 bis 80 Gew.-% Wirkstoff enthalten.

**Claims**

1. Use as vegetation growth factors of compounds with the formula (I):

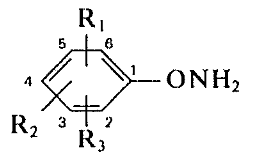

(I)

in which either $R_1$ represents a hydrogen atom and

- either $R_2$ represents a hydrogen atom and $R_3$ represents a hydrogen atom, a methyl radical at 2, 3 or 4, a chlorine atome at 3 or 4, a bromine atom or a $CF_3$ radical at 4 or a $NO_2$ radical at the position 2 or 4,
- or $R_2$ represents a nitro radical at 2 and $R_3$ represents a nitro radical or a $CF_3$ radical at 4,

or $R_1$ represents a nitro radical at 2 and

- either $R_2$ represents a nitro radical at 4 and $R_3$ a nitro radical at 6,
- or $R_2$ represents a nitro radical at 6 and $R_3$ a $CF_3$ radical at 4 as well as their salts of addition with organic and mineral acids.

2. Use as vegetation growth factors according to Claim 1 of O-(4-nitrophenyl) hydroxylamine.

3. Use as vegetation growth factors according to Claim 1 of the compound with the formula (I) as defined in Claim 1 of which the names follow:

- O-phenyl hydroxylamine;
- O-(4-chlorophenyl) hydroxylamine as well as their salts of addition with organic and mineral acids and particularly their hydrochlorides.

4. Use according to Claim 1, as growth factors of so-called $C_3$ vegetation, of compounds with the formula (I) as defined in Claim 1.

5. Use according to Claim 1 as growth factors of so-called $C_3$ vegetation of O-(4-nitrophenyl) hydroxylamine.

6. Use according to Claim 1 as growth factors of so-called $C_3$ vegetation of compounds with the formula (I) as defined in Claim 1 of which the names follow:

- O-phenyl hydroxylamine;
- O-(4-chlorophenyl) hydroxylamine as well as their salts of additions with organic and mineral acids and particularly their hydrochlorides.

7. Compositions used as vegetation growth factors, characterized in that they contain as active principle at least one compound with the formula (I) as defined in Claim 1 or at least one of their salts.

8. Compositions used as vegetation growth factors, characterized in that they contain as active principle the compound defined in Claim 2.

9. Compositions used as growth factors of vegetation characterized in that they contain as active principle at least one compound defined in Claim 3.

10. Compositions as defined in Claim 7, 8 or 9, characterized in that they are used in quantities of active principle, varying from 20 g to 500 g per hectare.

11. Compositions as defined in Claim 7, 8 or 9, characterized in that they contain from 10 to 80% by weight of active principle.